(19) **Europäisches Patentamt**
**European Patent Office**
**Office européen des brevets**

(11) **EP 2 371 773 A1**

(12) **EUROPEAN PATENT APPLICATION**

(43) Date of publication:
**05.10.2011 Bulletin 2011/40**

(51) Int Cl.:
**C03B 19/14** $^{(2006.01)}$

(21) Application number: **11002704.2**

(22) Date of filing: **31.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.04.2010 JP 2010085348**

(71) Applicant: **ASAHI GLASS COMPANY, LIMITED**
**Chiyoda-ku,**
**Tokyo 100-8405 (JP)**

(72) Inventors:
- **Tamitsuji, Chikaya**
  **Chiyoda-ku**
  **Tokyo 100-8405 (JP)**
- **Watanabe, Kunio**
  **Chiyoda-ku**
  **Tokyo 100-8405 (JP)**
- **Koike, Akio**
  **Chiyoda-ku**
  **Tokyo 100-8405 (JP)**

(74) Representative: **Müller-Boré & Partner**
**Patentanwälte**
**Grafinger Straße 2**
**81671 München (DE)**

(54) **Method for production of synthetic quartz glass**

(57) The present invention relates to a method for production of a synthetic quartz glass having a fluorine concentration of 1,000 ppm by mass or higher, comprising the following processes steps (a) to (c): (a) depositing and growing quartz glass fine particles obtained by flame hydrolysis of a glass-forming material onto a substrate, to thereby form a porous glass body; (b) maintaining the porous glass body in a reaction vessel under an elemental fluorine ($F_2$)-containing atmosphere of 400°C or lower, to thereby obtain a fluorine-containing porous glass body; and (c) heating the fluorine-containing porous glass body in a vitrification furnace to a transparent vitrification temperature, to thereby obtain a fluorine-containing transparent glass body, wherein, in step (b), elemental fluorine ($F_2$) is continuously or intermittently supplied to the reaction vessel and the gas in the reaction vessel is continuously or intermittently discharged from the reaction vessel.

EP 2 371 773 A1

**Description**

The present invention relates to a method for production of synthetic quartz glass.

Photolithography is widely used to transcribe a fine circuit pattern onto a wafer and thereby fabricate an integrated-circuit.

A substrate for optical members for photolithography is required to be made of a material having a high UV transmittance and durability. For example, fluorine-containing synthetic quartz glass is suggested as such a material (Patent Document 1),

Further, in accordance with the recent trends toward high integration and high functionalization of integerated circuits, microsizing of the integrated circuits and shortening of the wavelength of an exposure light source are being advanced. For this reason, lithography using EUV light (representatively, light with a wavelength of 13 nm) is attracting attention.

Extreme ultra violet (EUV) light refers to light of the wavelength band of a soft X-ray region or vacuum ultraviolet region, specifically, light having wavelength of about 0.2 to about 100 nm. All optical members of exposure devices for EUV lithography are reflective optical systems, since there is no a material capable of transmitting light of EUV light energy region therethrough.

A substrate of optical members for EUV lithography (such as photomask or mirror) is required to be made of a material having a low coefficient of thermal expansion so as to prevent distortion at the time of irradiation with EUV light. For example, $TiO_2$-containing synthetic quartz glass containing fluorine of 100 ppm by mass or more is suggested as such a material (Patent Document 2).

A method including the following steps (a) to (c) is suggested as a method of introducing fluorine into synthetic quartz glass (Patent Document 1, 2):

(a) depositing and growing quartz glass fine particles obtained by flame hydrolysis of a glass-forming material onto a substrate, to thereby form a porous glass body;
(b) maintaining the porous glass body under an atmosphere containing a fluorine compound, to thereby obtain a fluorine-containing porous glass body; and
(c) heating the fluorine-containing porous glass body to a transparent vitrification temperature, to thereby obtain a fluorine-containing transparent glass body.

RELATED ART DOCUMENT

[Patent Document 1] JP-A-2003-183034
[Patent Document 2] JP-A-2005-104820

Patent Documents 1 and 2 disclose such as $SiF_4$, $SF_6$, $CHF_3$, $CF_4$, $F_2$ as fluorine compounds used in step (b). Of these fluorine compounds, $SiF_4$ is used in Examples of Patent Documents 1 and 2. However, the introduction of 1,000 ppm by mass or more of fluorine in the porous glass body using $SiF_4$ requires a high temperature higher than 400°C, thus causing the following problems:

(i) O-ring is required to be cooled with water in order to secure gas tightness of a reaction vessel, thus making the reaction vessel complicated;
(ii) The use of an electric furnace as the reaction vessel is required, but, in the case where the porous glass body has a large size, it is difficult to prepare an electric furnace suitable for the glass size; and
(iii) Such as variation in temperature and turbulence of gasflow cause variation in the amount of the introduced fluorine among the porous glass body. When the glass body is used as an optical member for EUV lithography, the variation in the fluorine, concentration among the glass body causes variation in coefficient of thermal expansion among the glass body, resulting in deterioration of resolution upon exposure.

Meanwhile, the inventors of the present invention confirmed that 1,000 ppm by mass or more of fluorine can be introduced into the porous glass body at a low temperature of 400°C or lower using high-reactive elemental fluorine ($F_2$) among the above-mentioned fluorine compounds.

However, it has been proved that, in the case where elemental fluorine ($F_2$) is used in step (b), during the transparent vitrification of the subsequent step (c), fluorine is eliminated from the glass body and the fluorine concentration of the resulting transparent glass body is thus considerably deteriorated.

The present invention provides a method for production of synthetic quartz glass in which the introduction of fluorine into a porous glass body can be carried out at a low temperature of 400°C or lower and fluorine concentration in the finally-obtained synthetic quartz glass can be achieved steadily to be 1,000 ppm by mass or higher.

The method of the present invention is a method for production of a synthetic quartz glass having a fluorine concentration of 1,000 ppm by mass or higher, comprising the following steps (a) to (c):

(a) depositing and growing quartz glass fine particles obtained by flame hydrolysis of a glass-forming material onto a substrate, to thereby form a porous glass body;
(b) maintaining the porous glass body in a reaction vessel under an elemental fluorine ($F_2$)-containing atmosphere of 400°C or lower, to thereby obtain a fluorine-containing porous glass body; and
(c) heating the fluorine-containing porous glass body in a vitrification furnace to a transparent vitrification temperature, to thereby obtain a fluorine-containing transparent glass body,

wherein, in step (b), elemental fluorine ($F_2$) is continuously or intermittently supplied to the reaction vessel and the gas in the reaction vessel is continuously or intermittently discharged from the reaction vessel.

Further a method of the present invention is a method for production of a $TiO_2$-containing synthetic quartz glass ($TiO_2$-$SiO_2$ glass) having a fluorine concentration of 1,000 ppm by mass or higher, comprising the following steps (a) to (c) :

(a) depositing and growing $TiO_2$-$SiO_2$ glass fine particles obtained by flame hydrolysis of a glass-forming material onto a substrate, to thereby form a porous $TiO_2$-$SiO_2$ glass body;
(b) maintaining the porous $TiO_2$-$SiO_2$ glass body in a reaction vessel under an elemental fluorine ($F_2$)-containing atmosphere of 400°C or lower, to thereby obtain a fluorine-containing porous $TiO_2$-$SiO_2$ glass body; and
(c) heating the fluorine-containing porous $TiO_2$-$SiO_2$ glass body in a vitrification furnace to a transparent vitrification temperature, to thereby obtain a fluorine-containing transparent $TiO_2$-$SiO_2$ glass body,

wherein, in step (b), elemental fluorine ($F_2$) is continuously or intermittently supplied to the reaction vessel and the gas in the reaction vessel is continuously or intermittently discharged from the reaction vessel.

In the above step (b), it is preferred that a supply amount and a discharge amount of elemental fluorine ($F_2$), and a residence time are controlled so that a consumption rate of elemental fluorine ($F_2$) obtained by the following equation is adjusted to a prescribed rate:

$$[\text{Consumption Rate}] = ([\text{Supply Amount}] - [\text{Discharge Amount}]) / [\text{Residence Time}]$$

wherein [Consumption Rate] represents a consumption amount (moles) of elemental fluorine ($F_2$) per unit time, per unit weight of the porous glass body; [Supply Amount] represents an amount (moles) of elemental fluorine ($F_2$) supplied to the reaction vessel, per unit weight of the porous glass body; [Discharge Amount] represents an amount (moles) of elemental fluorine ($F_2$) discharged from the reaction vessel, per unit weight of the porous glass body; and [Residence Time] represents a period obtained by the following equation:

$$[\text{Residence Time}] = [\text{Total Amount of Gas Phase in the Reaction Vessel}] / [\text{Supply Rate}]$$
$$+ [\text{Airtight Maintaining Period}]$$

wherein [Total Amount of Gas Phase in the Reaction Vessel] represents a total amount (moles) of gas components contained in the gas phase in the reaction vessel; [Supply Rate] represents a total supply amount (moles) of elemental fluorine ($F_2$) or a mixed gas of elemental fluorine ($F_2$) diluted with an inert gas supplied to the reaction vessel per unit time; and [Airtight Maintaining Period] represents a maintaining period per airtightness maintenance.

Further, it is preferred that the consumption rate of elemental fluorine ($F_2$) falls within the range of from 3.1 x $10^{-4}$ mol/(hr·kg) to 0.08 mol/(hr·kg).

In accordance with the method for production of synthetic quartz glass of the present invention, the introduction of fluorine into the porous glass body can be carried out at a low temperature of 400°C or lower and fluorine concentration in the finally-obtained synthetic quartz glass can be achieved steadily to be 1,000 ppm by mass or higher. In addition, the above-mentioned problems (i) to (iii) can be solved by introducing fluorine into the porous glass body at a low temperature of 400°C or lower. In particular, owing to solving the problem (iii), there can be produced a synthetic quartz glass having a fluorine concentration of 1,000 ppm by mass or higher, having an extremely small variation in fluorine concentration, and thus being suitable for optical members of exposure devices for EUV lithography.

Hereinafter, in the present specification, "ppm" means "ppm by mass" and "%" means "% by mass", unless specifically mentioned otherwise.

Further, a "TiO$_2$-containing synthetic quartz glass" is referred to as a "TiO$_2$-SiO$_2$ glass".

Further, in some cases, a "synthetic quartz glass containing no TiO$_2$" and "TiO$_2$-SiO$_2$ glass" may be broadly referred to as a "synthetic quartz glass".

Further, in some cases, "quartz glass fine particles containing no TiO$_2$" and "TiO$_2$-SiO$_2$ glass fine particles" may be broadly referred to as "quartz glass fine particles".

Further, in some cases, a "porous glass body containing no TiO$_2$ and "porous TiO$_2$-SiO$_2$ glass body" may be broadly referred to as a "porous glass body".

Further, in some cases, a "transparent glass body containing no TiO$_2$" and "transparent TiO$_2$-SiO$_2$ glass body" may be broadly referred to as a "transparent glass body".

Further, in some cases, a formed glass body containing no TiO$_2$" and "formed TiO$_2$-SiO$_2$ glass body" may be broadly referred to as a "formed glass body".

<Method for Production of Synthetic Quartz Glass>

The method for production of synthetic quartz glass according to the present invention includes the following steps (a) to (e):

(a) depositing and growing quartz glass fine particles obtained by flame hydrolysis of a glass-forming material onto a substrate, to thereby form a porous glass body;
(b) maintaining the porous glass body in a reaction vessel under an elemental fluorine (F$_2$)-containing atmosphere of a pressure of P$_{b1}$ and a temperature of 400°C or lower, to thereby obtain a fluorine-containing porous glass body;
(c) heating the fluorine-containing porous glass body in a vitrification furnace to a transparent vitrification temperature, to thereby obtain a fluorine-containing transparent glass body;
(d) if necessary, heating the fluorine-containing transparent glass body obtained in step (c) to a softening temperature or higher and molding the transparent glass body to a desired shape, to thereby obtain a fluorine-containing formed glass body; and
(e) if necessary, annealing the fluorine-containing transparent glass body obtained in step (c), or formed glass body obtained in step (d).

(Step (a))

Quartz glass fine particles (soot) obtained by flame hydrolysis of an SiO$_2$ precursor, or an SiO$_2$ precursor and a TiO$_2$ precursor, as a glass-forming material, to by a soot method are deposited and grown onto a substrate to form a porous glass body.

The SiO$_2$ precursor is not particularly limited so long as it is capable of being gasified. The SiO$_2$ precursor includes such as silicon halide compounds and alkoxysilanes.

The silicon halide compounds include, e.g., chlorides such as SiCl$_4$, SiHCl$_3$, SiH$_2$Cl$_2$ and SiH$_3$Cl; fluorides such as SiF$_4$, SiHF$_3$ and SiH$_2$F$_2$; bromides such as SiBr$_4$ and SiHBr$_3$; and iodides such as SiI$_4$

The alkoxysilanes include compounds represented by the following formula:

$$R_n Si(OR)_{4-n}$$

wherein R is an alkyl group having 1 to 4 carbon atoms, R's may be the same or different, and n is an integer of 0 to 3,

The TiO$_2$ precursor is not particularly limited so long as it is capable of being gasified. The TiO$_2$ precursor includes such as titanium halide compounds and alkoxytitaniums.

The titanium halide compounds include, e.g., chlorides such as TiCl$_4$, TiHCl$_3$, TiH$_2$Cl$_2$ and TiH$_3$Cl; fluorides such as TiF$_4$, TiHF$_3$ and TiH$_2$F$_2$; bromides such as TiBr$_4$ and TiHBr$_3$; and iodides such as TiI$_4$

The alkoxytitaniums include compounds represented by the following formula:

$$R_n Ti(OR)_{4-n}$$

wherein R is an alkyl group having 1 to 4 carbon atoms, R's may be the same or different, and n is an integer of 0 to 3.

Furthermore, compounds containing Si and Ti such as silicon titanium double alkoxide can be used as the SiO$_2$ precursor and the TiO$_2$ precursor.

As the substrate, a quartz glass-made target (for example, a seed rod described in JP-A-63-24973) can be used. Further, the substrate is not limited to a rod shape, and a plate-shaped substrate may be used.

(Step (a'))

Furthermore, between step (a) and step (b), it is preferred to carry out presintering in order to increase the bulk density of the porous glass body.

It is considered that Si-OH is present on the surface of the particle constituting the porous glass body. It is also considered that as the bulk density is increased, the specific surface area of the particle is decreased and the amount of Si-OH present in the porous glass body is relatively decreased. That is, it is considered that as the bulk density of the porous glass body is increased, the amount of Si-OH present in the porous glass body is decreased and the amount of HF generated by the reaction caused at the time of introducing fluorine into the porous glass body is relatively decreased. As a result, it is considered that the elimination of fluorine from the glass body in step (c) can be suppressed due to the reasons described below.

The presintering is preferably carried out at a temperature of 1,100°C or higher, and more preferably 1,150°C or higher. When the temperature is too low, there is concern that sintering of the particles does not proceed and the bulk density does not change.

On the other hand, the presintering is preferably carried out at a temperature of 1,350°C or lower, and more preferably 1,300°C or lower. When the temperature is too high, the sintering may excessively proceed and closed pores may be present. As a result, there is concern that, for example, variation in the fluorine concentration occurs when fluorine is introduced into the porous glass body in step (b), bubbles remain after the transparent vitrification in step (c), or the amount of Si-OH is remarkably decreased, thereby the reaction with elemental fluorine ($F_2$) becomes slow.

The bulk density of the porous glass body after the presintering is preferably 0.1 $g/cm^3$ or higher, more preferably 0.2 $g/cm^3$ or higher, further preferably 0.4 $g/cm^3$ or higher, and particularly preferably 0.6 $g/cm^3$ or higher. Where the bulk density is too low, the specific surface area of the particle is increased and the amount of Si-OH is increased. As a result, there are concerns that the elimination of fluorine in step (c) cannot be suppressed and it is difficult to make the transparent glass body have the fluorine concentration of 1,000 ppm or higher.

On the other hand, the bulk density of the porous glass body after the presintering is preferably 1.6 $g/cm^3$ or lower, more preferably 1.4 $g/cm^3$ or lower, and particularly preferably 1.2 $g/cm^3$ or lower. Where the bulk density is too high, the specific surface area of the particle is decreased and the amount of Si-OH becomes extremely small. As a result, there is concern that the reaction rate is lowered.

(Step (b))

The porous glass body obtained in step (a) is maintained in a reaction vessel under an elemental fluorine ($F_2$)-containing atmosphere of 400°C or lower, to thereby obtain a fluorine-containing porous glass body.

The reaction vessel may be selected from known reactors. Specifically, such as an internal-stirred type tank reaction vessel having stirring blades inside the reactor, a continuous stirred-tank reaction vessel (CSTR) that can continuously or intermittently supply and discharge elemental fluorine ($F_2$), or a piston flow type reaction vessel (PFR) is suitable for use as the reaction vessel, from the viewpoint that the contact between elemental fluorine ($F_2$) and the porous glass body can be efficiently conducted. In order to continuously or intermittently supply and discharge elemental fluorine ($F_2$), the reaction vessel may be provided with devices to control a flow rate and a pressure (e.g., pressure-reducing valve, back pressure regulating valve, control valve, flow meter).

The reaction vessel is preferably that the inner wall and the internal facility thereof are constituted of a material having corrosion resistance against elemental fluorine ($F_2$). In addition, the material is preferably a material which does not generate gaseous impurities in step (b), or may generate any gaseous material and the gaseous material does not become impurities. This is because if an impurity is mixed into a synthetic quartz glass, there is a concern that optical properties such as haze or physical properties such as a coefficient of thermal expansion are deteriorated.

Specifically, the material suitably utilized as the inner wall and the internal facility of the reaction vessel includes metals such as nickel, copper and iron, alloys such as stainless steel (SUS316), monel, inconel and hastelloy, glasses such as synthetic quartz glass and soda lime glass, metal halides such as calcium fluoride and nickel fluoride, and perhalogenated resins such as polytetrafluoroethylene, tetrafluoroethylene-perfluoro(alkyl vinyl ether) copolymer (referred to as "PFA", hereinafter) and polychlorotrifluoroethylene.

Further, in order to improve corrosion resistance against elemental fluorine ($F_2$), it is preferable that a passivation coating layer made of fluoride or oxide is formed on the surface of the inner wall and internal facility of the reaction vessel. It is more preferable that a passivation coating layer made of fluoride is formed. The passivation of the surface can be carried out by exposing the surface to an elemental fluorine ($F_2$)-containing atmosphere.

In the present invention, a fluorine-containing porous glass body containing 1,000 ppm or more of fluorine can be obtained at a low temperature of 400°C or lower, as mentioned above, by using high-reactive elemental fluorine ($F_2$) as a fluorine source to introduce fluorine into the porous glass body.

The elemental fluorine ($F_2$)-containing atmosphere is an atmosphere consisting of only elemental fluorine ($F_2$)

or a mixed gas of elemental fluorine ($F_2$) diluted with an inert gas in the initial phase of step (b). As step (b) proceeds, the atmosphere contains HF produced by the reaction occurred during introduction of fluorine into the porous glass body.

The inert gas is a gas inert against reactions which occur at the time of introduction of fluorine into the porous glass body. The inert gas specifically includes nitrogen gas, and a rare gas such as helium gas or argon gas. However, where water is contained in the inert gas, there is the possibility that water reacts with elemental fluorine ($F_2$). Therefore, the dew point of the inert gas is preferably -10°C or lower, more preferably -40°C or lower, and particularly preferably - 60°C or lower.

From the standpoints of easiness of reaction control and economical efficiency, the elemental fluorine ($F_2$)-containing atmosphere is preferably a mixed gas obtained by diluted elemental fluorine ($F_2$) with an inert gas, and particularly preferably a mixed gas obtained by diluting elemental fluorine ($F_2$) with nitrogen gas.

From the standpoints of easiness of reaction control and economical efficiency, the concentration of elemental fluorine ($F_2$) in the mixed gas obtained by diluted elemental fluorine ($F_2$) with nitrogen gas is preferably from 100 ppm by mol to 50% by mole, and more preferably from 1,000 ppm by mole to 30% by mole. When the concentration of elemental fluorine ($F_2$) is too low, a rate of introducing fluorine into the porous glass body may decrease and the reaction time may be prolonged. On the other hand, when the concentration of elemental fluorine ($F_2$) is too high, a rate of introducing fluorine into the porous glass substrate may be accelerated and the reaction control may become difficult.

Further, in order to uniformly introduce fluorine into porous glass body within a short period of time, it is preferable that the reaction vessel, in which the porous glass body is disposed, is maintained under the condition of the internal pressure lower than the atmospheric pressure, and then elemental fluorine ($F_2$) is supplied into the reaction vessel until the internal pressure reaches a prescribed pressure.

The internal pressure of the reaction vessel at which the internal pressure of the reaction vessel is lower than the atmospheric pressure is maintained preferably at 13,000 Pa or lower and particularly preferably 1,300 Pa or lower.

The internal temperature of the reaction vessel at which the internal pressure of the reaction vessel is lower than the atmospheric pressure is preferably 30°C to 300°C, more preferably 50°C to 200°C, and particularly preferably 60°C to 150°C, in order to realize efficient deaeration.

Owing to maintaining the internal pressure of the reaction vessel lower than the atmospheric pressure and deaerating the reaction vessel, water or volatile organic substances present in the reaction vessel can be removed, and the generation of HF by reaction of the water or volatile organic substances with elemental fluorine ($F_2$) can be prevented.

In the present invention, in step (b), elemental fluorine ($F_2$) is continuously or intermittently supplied to the reaction vessel and the gas in the reaction vessel is continuously or intermittently discharged from the reaction vessel.

The process "elemental fluorine ($F_2$) is continuously supplied to the reaction vessel and the gas in the reaction vessel is continuously discharged from the reaction vessel" means that elemental fluorine ($F_2$) or a mixed gas of elemental fluorine ($F_2$) diluted with an inert gas is continuously supplied into the reaction vessel containing the porous glass body therein, and simultaneously, a part of gas containing HF is continuously discharged from the reaction vessel. Hereinafter, this process will be also referred to as "continuous supply and discharge method".

The process "elemental fluorine ($F_2$) is intermittently supplied to the reaction vessel and the gas in the reaction vessel is intermittently discharged from the reaction vessel" means that the following steps are carried out two or more times repeatedly: filling the reaction vessel containing the porous glass body therein with elemental fluorine ($F_2$) or a mixed gas of elemental fluorine ($F_2$) diluted with an inert gas and the reaction vessel is maintained in an airtight state; and then discharging the gas containing HF from the reaction vessel. Hereinafter, this process will also be referred to as "intermittent supply and discharge method".

The continuous supply and discharge method can always discharge HF from the reaction vessel and thus exhibits superior HF removal efficiency per unit time, as compared to the intermittent supply and discharge method. On the other hand, the intermittent supply and discharge method provides a period during which HF generated in the porous glass body diffuses into a gas phase in the reaction vessel and thus exhibits superior HF removal efficiency per discharged gas amount, as compared to the continuous supply and discharge method. In the present invention, the intermittent supply and discharge method is preferred because the amount of elemental fluorine ($F_2$) used can be reduced.

In the intermittent supply and discharge method, the number of times, at which the reaction vessel containing porous glass body therein is filled with elemental fluorine ($F_2$) or a mixed gas of elemental fluorine ($F_2$) diluted with an inert gas and is maintained in an airtight state, is preferably 2 to 20, more preferably 3 to 15, and further preferably 4 to 10. When airtightness maintenance is performed once, HF removal efficiency per unit time is poor and elimination of fluorine during transparent vitrification in step (c) cannot be prevented. When the number of times of airtightness maintenance is excessively large, operation is complicated and HF removal efficiency per discharged gas amount is deteriorated.

In the intermittent supply and discharge method, a maintaining period per airtightness maintenance is determined by considering factors including at least one of the volume of gas phase in the reaction vessel, the temperature in the reaction vessel, the pressure in the reaction vessel, and the mass of porous glass body. In the intermittent supply and discharge method, a maintaining period per airtightness maintenance is longer than zero. The short maintaining period per airtightness maintenance is preferable in terms of production efficiency. The maintaining period is preferably one day or shorter, more preferably 16 hours or shorter, and even more preferably 10 hours or shorter.

The long maintaining period per airtightness maintenance is preferable in terms of HF removal efficiency per discharged gas amount. The maintaining period is preferably 10 seconds or longer, more preferably one minute or longer, and even more preferably 10 minutes or longer.

In step (b), owing to continuously or intermittently supplying elemental fluorine ($F_2$) into the reaction vessel and continuously or intermittently discharging the gas in the reaction vessel from the reaction vessel, HF generated in the reaction field can be continuously or intermittently discharged. Due to the reason described below, it is possible to prevent generation of new Si-OH in the porous glass body and to reduce proton sources in the porous glass body. As a result, due to the reason described below, fluorine introduced into the porous glass body in step (b) can be prevented from elimination during the transparent vitrification in step (c).

Meanwhile, when a proton source in the porous glass body is excessively low, due to the reason described below, it is difficult to introduce 1,000 ppm or more of fluorine into the porous glass body at a sufficient rate and at a low temperature of 400°C or lower.

Accordingly, it is preferable that removal of HF generated in the reaction field in step (b) is controlled so that the amount of proton sources in the porous glass body is adjusted to a range enabling both introduction of fluorine at a low temperature in step (b) and reduction of the amount of fluorine eliminated from the glass body in step (c).

Although the amount of proton sources in the porous glass body cannot be directly observed, it may be evaluated as, for example, a consumption rate of elemental fluorine ($F_2$). Further, the amount of HF discharged per unit time can be evaluated by bringing the discharged gas into contact with sodium fluoride to adsorb HF contained in the gas thereon and measuring a mass change of sodium fluoride.

The consumption rate of elemental fluorine ($F_2$) may be calculated in accordance with the following equation by either the continuous supply and discharge method or intermittent supply and discharge method:

$$[\text{Consumption Rate}] = ([\text{Supply Amount}] - [\text{Discharge Amount}]) / [\text{Residence Time}]$$

wherein [Consumption Rate] represents a consumption amount (moles) of elemental fluorine ($F_2$) per unit time, per unit weight of the porous glass body; [Supply Amount] represents an amount (moles) of elemental fluorine ($F_2$) supplied to the reaction vessel, per unit weight of the porous glass body; [Discharge Amount] represents a amount (moles) of elemental fluorine ($F_2$) discharged from the reaction vessel, per unit weight of the porous glass body; and [Residence Time] represents a period obtained by the following equation:

$$[\text{Residence Time}] = [\text{Total Amount of Gas Phase in the Reaction Vessel}] / [\text{Supply Rate}]$$
$$+ [\text{Airtight Maintaining Period}]$$

wherein [Total Amount of Gas Phase in the Reaction Vessel] represents a total amount (moles) of gas components contained in the gas phase in the reaction vessel; [Supply Rate] represents, when the atmosphere in step (b) is an atmosphere consisting of only elemental fluorine ($F_2$), a supply amount (moles) of elemental fluorine ($F_2$) supplied to the reaction vessel per unit time, or represents, when the atmosphere in step (b) is a mixed gas of elemental fluorine ($F_2$) diluted with an inert gas, a total supply amount (moles) of a mixed gas of elemental fluorine ($F_2$) diluted with an inert gas supplied to the reaction vessel per unit time; and [Airtight Maintaining Period] represents a maintaining period per airtightness maintenance. In the intermittent supply and discharge method, each parameter mentioned above represents the value per unit cycle. The unit cycle means that the following steps are carried out once: filling the reaction vessel containing the porous glass body therein with elemental fluorine ($F_2$) or a mixed gas of elemental fluorine ($F_2$) diluted with an inert gas and the reaction vessel is maintained in an airtight state; and then discharging the gas containing HF from the reaction vessel.

The discharge amount of elemental fluorine ($F_2$) discharged from the reaction vessel per unit time, for example, can be calculated by bringing the discharged gas into contact with sodium fluoride, adsorbing HF contained in the gas onto the sodium fluoride to remove the HF from the gas, bringing the remaining gas into contact with an aqueous potassium hydroxide solution to react elemental fluorine ($F_2$) contained in the gas with the aqueous potassium hydroxide solution, and measuring fluorine ions contained in the aqueous potassium hydroxide solution using an F ion electrode.

In the present invention, in step (b), it is preferable to control the supply amount and discharge amount of elemental fluorine ($F_2$), and the residence time so that the consumption rate of elemental fluorine ($F_2$) is adjusted to a prescribed rate.

The term "prescribed rate" means a suitable consumption rate range enabling both introduction of fluorine at a low temperature in step (b) and reduction of the amount of fluorine eliminated from the glass body in step (c). The suitable range of the consumption rate of elemental fluorine ($F_2$) may be varied depending on factors such as the volume of gas phase in the reaction vessel, the temperature in the reaction vessel, the partial pressure of elemental fluorine ($F_2$), and the mass of the porous glass body, and therefore, it may be obtained from practical preliminary experiments.

The suitable range of the residence time may be varied depending on factors such as the volume of gas phase in the reaction vessel, the temperature in the reaction vessel, the partial pressure of elemental fluorine ($F_2$), and the mass of the porous glass body, and therefore, it may be obtained from practical preliminary experiments.

The short residence time is preferable in terms of production efficiency. The residence time is preferably 1 week or shorter, more preferably 5 days or shorter, and even more preferably 2 days or shorter.

The long residence time is preferable in terms of HF removal efficiency per discharged gas amount. The residence time is preferably 10 seconds or longer, more preferably 30 seconds or longer, and even more preferably one minute or longer.

The suitable range of the consumption rate for introducing 1,000 ppm by mass or more of, that is, 0.05 mol/kg of fluorine into the porous glass body is preferably $3.1 \times 10^{-4}$ mol/(hr·kg) or higher, more preferably $4.4 \times 10^{-4}$ mol/(hr·kg) or higher, and further preferably $1.1 \times 10^{-3}$ mol/(hr·kg) in terms of production efficiency. When the consumption rate is extremely high, due to the reason described below, the suppression of the amount of fluorine eliminating from the fluorine-containing porous glass body during the transparent vitrification becomes difficult. Therefore, the consumption rate is preferably 0.08 mol/(hr·kg) or lower, more preferably 0.06 mol/(hr·kg) or lower, and further preferably 0.05 mol/(hr·kg) or lower.

The internal pressure of the reaction vessel is preferably 1 MPa or lower, more preferably 0.6 MPa or lower, and further preferably 0.3 MPa or lower in gauge pressure. As the internal pressure of the reaction vessel decreases, the removal of HF from the porous glass body can be promoted and HF can be thus efficiently discharged.

The internal pressure of the reaction vessel is preferably 0 MPa or higher in gauge pressure. When the internal pressure $P_{b1}$ of reaction vessel is lower than the atmospheric pressure, there is possibility that the outside air is sucked into the reaction vessel. Such as water and volatile organic substances contained in the outside air react with elemental fluorine ($F_2$) to generate HF.

The internal temperature of the reaction vessel is 400°C or lower, preferably 250°C or lower, more preferably 220°C or lower, further preferably 200°C or lower, and particularly preferably 100°C or lower. As the internal temperature $T_{b1}$ of the reaction vessel decreases, the choices of the raw material of the reaction vessel widens and facility costs are reduced.

The internal temperature of the reaction vessel is preferably -50°C or higher, more preferably 0°C or higher, and further preferably 20°C or higher. As the internal temperature of the reaction vessel increases, diffusion of elemental fluorine ($F_2$) into the porous glass body can be facilitated, and an introduction period of fluorine into the porous glass body can be reduced.

In the final phase of step (b), there is a case in which the amount of proton sources in the porous glass body decreases and the reaction rate decreases. In this case, there is no problem even if the concentration of elemental fluorine ($F_2$), the maintaining period of each airtight maintaining period, the temperature in the reaction vessel, and the pressure in the reaction vessel are increased within the mentioned ranges, as necessary.

(Step (b'))

Between step (b) and step (c), in order to remove unreacted elemental fluorine ($F_2$) adsorbed on the fluorine-containing porous glass body from the porous glass body, it is preferable that the fluorine-containing porous glass body obtained in step (b) is maintained in the same reaction vessel under the condition of a pressure lower than the atmospheric pressure to carry out a deaeration treatment of the fluorine-containing porous glass body.

The internal pressure of the reaction vessel is preferably 13,000 Pa or lower and particularly preferably 1,300 Pa or lower.

The internal temperature of the reaction vessel is preferably from 30°C to 300°C, more preferably from 50°C to 250°C, and particularly preferably from 60°C to 200°C, in order to realize efficient deaeration.

(Step (c))

The fluorine-containing porous glass body obtained in step (b) is heated in a vitrification furnace to a transparent vitrification temperature, to thereby obtain a fluorine-containing transparent glass body.

The reaction vessel used in step (b) is unsuitable for continuously use as the vitrification furnace used at the following transparent vitrification temperature in terms of heat resistance. For this reason, the fluorine-containing porous glass body obtained in step (b) is moved from the reaction vessel to the vitrification furnace. For example, there is a method in which the porous glass body is moved so that it does not come into contact with the air by using a movable air-tight container. However, this method has a disadvantage of complicated handling. Further, this method has a problem that, in order to handle bulky samples larger than 10 kg, a large facility is required, thereby causing an increase in cost. That is, the fluorine-containing porous glass body is necessarily required to come into contact with the air in order to move with a simpler manner.

The transparent vitrification temperature is commonly 1,350°C to 1,800°C, and preferably 1,400°C to 1,750°C.

The inner atmosphere of the vitrification furnace is preferably an atmosphere composed of only an inert gas (such as helium gas or argon gas), or an atmosphere containing an inert gas (such as helium gas or argon gas) as a main component.

The internal pressure of the vitrification furnace may be equal to or lower than the atmospheric pressure. When the internal pressure is lower than the atmospheric pressure, it is preferably 13,000 Pa or lower.

(Step (d))

The fluorine-containing transparent glass body obtained in step (c) is subjected to heating to a temperature of the softening point or higher and formed into a desired shape, thereby obtaining a fluorine-containing formed glass body. The forming temperature is preferably from 1,500°C to 1,800°C. When the temperature is 1,500°C or higher, the viscosity is sufficiently lowered so that the fluorine-containing transparent glass body deforms due to substantially its own weight. Furthermore, the growth of cristobalite which is crystal phase of $SiO_2$ (in the case of a $TiO_2$-$SiO_2$ glass body, further, growth of rutile or anatase which is crystal phase of $TiO_2$ is difficult to occur, whereby the occurrence of so-called devitrification can be prevented. At a temperature of 1,800°C or lower, sublimation of $SiO_2$ can be suppressed.

In the case of carrying out step (d), step (c) and step (d) can be carried out continuously or simultaneously.

(Step (e))

The transparent glass body obtained in step (c) is maintained at a temperature of 600°C to 1,200°C for 1 hour, and then subjected to annealing treatment in which the temperature is decreased to 500°C to 900°C at an average temperature decreasing rate of 10°C/hr or lower, thereby controlling a fictive temperature of the glass.

The formed glass body having a temperature of from 1,200°C obtained in step (d) is subjected to annealing treatment in which the temperature is decreased to 500°C to 900°C at an average temperature decreasing rate of 60°C/hr or lower, thereby controlling a fictive temperature of the glass.

After decreasing the temperature to 500°C or lower, the glass body can be allowed to stand for natural cooling.

The atmosphere in step (e) is preferably an atmosphere composed of only an inert gas (such as helium gas, argon gas or nitrogen gas), an atmosphere containing the inert gas as a main component, or the air atmosphere.

The pressure in step (e) is preferably reduced pressure or normal pressure.

To achieve lower fictive temperature, it is effective to cool during a temperature region near an annealing point and a strain point of the glass at lower cooling rate. Specifically, in the cooling profile of step (e), the lowest cooling rate is preferably 10°C/hr or lower, more preferably 5°C/hr or lower, further preferably 3°C/hr or lower, and particularly preferably 2°C/hr or lower.

(Actions and Effects)

The method for production of synthetic quartz glass according to the present invention described above uses high-reactive elemental fluorine ($F_2$) as a fluorine source, thus enabling introduction of fluorine into the porous glass body at a low temperature of 400°C or lower. Further, due to the following reason, although elemental fluorine ($F_2$) is used as a fluorine source, fluorine concentration of the finally-obtained synthetic quartz glass can be achieved steadily to be 1,000 ppm or higher.

Reason:

The porous glass body involves structurally unstable moieties among Si-O bonds of the $SiO_2$ network constituting the porous glass body and moieties having unstable functional groups such as Si-OH. Formation of Si-F bonds can be facilliated by reacting, in step (b), these unstable moieties with elemental fluorine ($F_2$) having reactivity higher than $SiF_4$.

Further, in the case where elemental fluorine ($F_2$) is used as a fluorine source, a proton source such as Si-OH generates HF in accordance with the following reaction scheme,

$$2Si\text{-}OH + 2F_2 \rightarrow 2Si\text{-}F + 2HOF \rightarrow 2Si\text{-}F + 2HF + O_2$$

$$2Si\text{-}OH + 2F_2 \rightarrow 2Si\text{-}OF + 2HF \rightarrow 2Si\text{-}F + O_2 + 2HF$$

The generated HF reacts with a stable Si-O-Si network of the porous glass body, to generate Si-OH again. The regenerated Si-OH also serves as a proton source to generate HF. That is, the proton source serves as a catalyst. Due to the aforementioned actions, the use of elemental fluorine ($F_2$) as a fluorine source enables 1000 ppm or more of fluorine to be introduced into the porous glass body at a low temperature of 400°C or lower.

On the other hand, in the case where a proton source such as Si-OH is present in a reaction field in step (c), HF is generated at the proton source and is thus eliminated from the fluorine-containing glass body in accordance with the following reaction scheme.

$$Si\text{-}OH + Si\text{-}F \rightarrow Si\text{-}O\text{-}Si + HF$$

Further, HF reacts with a relatively stable Si-O-Si network in step (c), for example, to cleave O-Si network of $Si\text{-}O\text{-}SiF_3$, and thereby generating a compound with a low molecular weight such as $SiF_4$ and $SiF_3OH$. These compounds with a low molecular weight are gasified and are thus eliminated from the reaction field during the transparent vitrification. It is considered that fluorine introduced into the fluorine-containing porous glass body is decreased in step (c) due to the aforementioned actions. Accordingly, it is considered that the amount of fluorine eliminated from the fluorine-containing porous glass body during the transparent vitrification can be reduced by reducing the proton sources present in the porous glass body before step (c). For example, the present inventors attempted to reduce the proton sources present in the porous glass body by allowing sodium fluoride, which is capable of adsorbing HF, to be present in the reaction vessel in step (b) (JP 2008-259711). However, when the proton source serving as a catalyst in step (b) is excessively decreased, fluorine cannot be sufficiently introduced into the porous glass body.

As mentioned above, step (b) requires a large amount of proton sources in order to introduce fluorine into the porous glass body at a sufficient rate, while step (c) necessarily requires decreased proton sources in the porous glass body in order to prevent elimination of fluorine during transparent vitrification, and there is a trade-off relationship between the introduction of fluorine at a low temperature in step (b) and the reduction of the amount of fluorine eliminated from the glass body in step (c).

Accordingly, in the present invention, owing to continuously or intermittently supplying elemental fluorine ($F_2$) to the reaction vessel and continuously or intermittently discharging the gas in the reaction vessel from the reaction vessel to thereby control the removal of HF generated in the reaction field in step (b), the amount of fluorine eliminated during the transparent vitrification in step (c) can be reduced while maintaining a sufficient reaction rate. Thus the fluorine concentration in the finally-obtained synthetic quartz glass can be achieved steadily to be 1,000 ppm or higher.

<Synthetic Quartz Glass>

(Fluorine Concentration)

In accordance with the production method of the present invention, synthetic quartz glass having a fluorine concentration of 1,000 ppm or higher can be prepared. The fluorine concentration of the synthetic quartz glass is preferably 3,000 ppm or higher, more preferably 5,000 ppm or higher and further preferably 7,000 ppm or higher. The fluorine concentration can be obtained with an FP (fundamental parameter) method utilizing samples having known fluorine concentrations by means of a fluorescence X-ray.

In accordance with the production method of the present invention, synthetic quartz glass having extremely small variation of a fluorine concentration, that is, extremely small variation width ΔF of a fluorine concentration, can be produced. The variation width ΔF of the fluorine concentration of the synthetic quartz glass is preferably within ±10%, more preferably within ±8%, further preferably within ±5%, and particularly preferably within ±3%, to the average value of the fluorine concentration. For example, in the case of a $TiO_2$-$SiO_2$ glass having the average value of the fluorine concentration of 1,000 ppm, the fluorine concentration is preferably within a range of from 900 ppm to 1,100 ppm and particularly preferably within a range of from 970 ppm to 1,030 ppm.

The variation width ΔF of the fluorine concentration of the formed synthetic quartz glass body obtained through step (d) or step (e) can be measured by, for example, the following procedures.
In the cylindrical formed synthetic quartz glass body formed to have a diameter of about 85 mm and a thickness of 50 mm by grinding the outer peripheral portion thereof, two points obtained by moving two intersections between an optional diameter and a circumference on the bottom of the cylinder toward the center by about 6 mm, are taken as point A and point B, respectively. The glass body is sliced along the planes passing the point A and the point B and each perpendicular to direction of the diameter (hereinafter referred to as plane A and plane B, respectively) to remove the outer peripheral portions. The resulting glass is further sliced along the planes perpendicular to the direction of the diameter with an interval of 12 mm toward the plane B from the plane A, thereby obtaining six glass pieces each having a thickness of 12 mm. To the obtained six glass pieces, six points of average fluorine concentrations on the surfaces at the same side to the plane A of the respective glass pieces and one point of an average fluorine concentration on the surface of the plane B, total seven points of fluorine concentrations, are obtained by fluorescent X-ray using samples having known fluorine concentrations with an FP method (fundamental parameter method). The fluorine concentration variation width ($\Delta F$ = [difference between maximum value and minimum value] / 2) in the whole formed synthetic quartz glass body is obtained from the average value of seven points of fluorine concentrations obtained and the difference between the maximum value and the minimum value.

(Fictive Temperature)

In accordance with the production method of the present invention, synthetic quartz glass having extremely small variation width ($\Delta Tf$) of fictive temperature can be obtained. The variation width $\Delta Tf$ of the fictive temperature of the synthetic quartz glass is preferably within 50°C, more preferably within 30°C, further preferably within 15°C, and particularly preferably within 5°C.

The variation width $\Delta Tf$ of the fictive temperature of the formed synthetic quartz glass body obtained through step (d) or step (e) can be measured by, for example, the following procedures.

Glass pieces are collected from two sites in the central portion of a cylindrical formed glass body, two sites in the outer peripheral portion thereof and two sites in the intermediate portion thereof, respectively, and mirror polishing is carried out for these glass pieces. An absorption spectrum is obtained on each of mirror-polished glass pieces by using an infrared spectrophotometer (Magna 760, manufactured by Nicolet). On this occasion, the data interval is adjusted to about 1.0 cm$^{-1}$ and an average value after scanning 64 times is used for the absorption spectrum. In the thus obtained infrared absorption spectrum, the peak observed at around 2,260 cm$^{-1}$ is derived from harmonic of stretching vibration induced by the Si-O-Si bond of the synthetic quartz glass. Using the peak position, a calibration curve is prepared by glasses whose fictive temperatures are known and which each has the same composition and then the fictive temperature is determined. The fictive temperature is determined at 2 points in each glass pieces, and the respective fictive temperatures of the central portion, the intermediate portion and the outer peripheral portion are calculated by averaging the fictive temperatures of 2 points. And the variation width of the fictive temperature ($\Delta Tf$=[difference between maximum value and minimum value of average fictive temperature]) in the whole formed glass body is obtained from the difference between the maximum value and the minimum value of those average fictive temperatures.

(TiO$_2$-SiO$_2$ Glass)

TiO$_2$ content of the TiO$_2$-SiO$_2$ glass is preferably from 1 to 12%, more preferably from 3 to 10%, and particularly preferably from 5 to 8%. Where the TiO$_2$ content is too small, there is concern that zero expansion is not achieved. Where the TiO$_2$ content is too large, there is a possibility that a coefficient of thermal expansion becomes negative.

The fictive temperature of the TiO$_2$-SiO$_2$ glass is preferably 1,200°C or lower, more preferably 1,100°C or lower, and particularly preferably 1,000°C or lower. Where the fictive temperature exceeds 1,200°C, the temperature range of zero-expansion is narrow, and there is concern for being insufficient for a material used as an optical member for EUVL. In order to expand the temperature range of zero expansion, the fictive temperature is preferably 950°C or lower and more preferably 900°C or lower.

The coefficient of thermal expansion of the TiO$_2$-SiO$_2$ glass can be adjusted by producing the TiO$_2$-SiO$_2$ glass by the production method of the present invention, evaluating its coefficient of thermal expansion, and feeding back the results to a fluorine concentration, a TiO$_2$ content and a fictive temperature. For example, in the case that the TiO$_2$-SiO$_2$ glass obtained by the production method of the present invention of which a temperature range of a coefficient of thermal expansion of $0\pm5$ ppb/°C is from 18 to 26°C is changed so as to have the temperature range of from 18 to 40°C, the change can be achieved by increasing the fluorine concentration, decreasing the fictive temperature or increasing the TiO2 content.

Hereinafter, the present invention will be described with reference to examples in more detail, but is not limited thereto.

Examples 1 to 3, 7, and 12 are Comparative Examples and Examples 4 to 6, and 8 to 11 are Examples.

(Fluorine Concentration)

The fluorine concentration of a formed TiO$_2$-SiO$_2$ glass body obtained was obtained with FP (fundamental parameter) method utilizing samples having known fluorine concentrations by means of using a fluorescence X-ray.

(Example 1)

(Step (a))

TiCl4 and SiCl$_4$, which are glass-forming materials of TiO$_2$-SiO$_2$ glass, were gasified, mixed and then subjected to heat hydrolysis (flame hydrolysis) in an oxyhydrogen flame, and the resulting TiO$_2$-SiO$_2$ glass fine particles were deposited and grown onto a substrate, to thereby form a porous TiO$_2$-SiO$_2$ glass body.

(Step (a' ))

Since it is difficult to handle the porous TiO$_2$-SiO$_2$ glass body thus obtained without any treatment, the porous TiO$_2$-SiO$_2$ glass body was maintained in the air at 1,200°C for 4 hours in a state still deposited on the substrate, and the porous TiO$_2$-SiO$_2$ glass body was separated from the substrate to obtain a porous TiO$_2$-SiO$_2$ glass body having a diameter of about 80 mm, a length of about 100 mm and a bulk density of 0.3 g/cm$^3$.

(Step (b))

The porous TiO$_2$-SiO$_2$ glass body was supported with a PFA-made jig and was then placed together with the jig in a nickel reaction vessel (volume: 1 L).
The reaction vessel was heated from the outside thereof using an oil bath to increase the internal temperature of the reaction vessel to 80°C from ambient temperature at a temperature increasing rate of 0.5 to 2°C/min.
While the internal temperature of the reaction vessel was maintained at 80°C, vacuum deaeration was carried out until the internal pressure of the reaction vessel reached 2,660 Pa or lower in absolute pressure, and the reaction vessel was maintained for one hour.
Batch Method:

A mixed gas of elemental fluorine (F$_2$) diluted to 20 mol% with nitrogen gas having a dew point of -60°C or lower was supplied to the reaction vessel until the internal pressure of the reaction vessel reached 0.21 MPa in a gauge pressure. The reaction vessel was maintained under the condition of a pressure of 0.21 MPa in a gauge pressure and a temperature of 140°C for 24 hours, to thereby obtain a fluorine-containing porous TiO$_2$-SiO$_2$ glass body.

(Step (c))

The fluorine-containing porous TiO$_2$-SiO$_2$ glass body was moved to a vitrification furnace so that it was exposed to the air. The porous TiO$_2$-SiO$_2$ glass body was heated to 1,360°C under reduced pressure in the vitrification furnace, maintained for 3 hours, subsequently heated to a transparent vitrification temperature (1,450°C) under a 100% helium gas atmosphere, and maintained for 4 hours, to thereby obtain a fluorine-containing transparent TiO$_2$-SiO$_2$ glass body.

(Step (d))

The fluorine-containing transparent TiO$_2$-SiO$_2$ glass body was moved to a carbon furnace and heated to a softening temperature or higher (1,700°C) under an argon gas atmosphere and formed to a circumferential shape, thereby obtaining a fluorine-containing formed TiO$_2$-SiO$_2$ glass body. The fluorine concentration of the formed TiO$_2$-SiO$_2$ glass body was measured. The result is shown in Table 1.

(Example 2)

A fluorine-containing formed TiO$_2$-SiO$_2$ glass body was obtained in the same manner as in Example 1, except that a pellet of sodium fluoride (manufactured by Stella Chemifa Corporation) was introduced into the reaction vessel in step (b) after the porous TiO2-SiO$_2$ glass body was placed in the reaction vessel so that the pellet did not come into contact with the porous TiO$_2$-SiO$_2$ glass body. The fluorine concentration of the formed TiO$_2$-SiO$_2$ glass body was measured. The result is shown in Table 1.

(Example 3)

A fluorine-containing formed TiO$_2$-SiO$_2$ glass body was obtained in the same manner as in Example 2, except that the pressure and the temperature were changed to 0.18 MPa in gauge pressure and 80°C, respectively in step (b). The fluorine concentration of the formed TiO$_2$-SiO$_2$ glass body was measured. The result is shown in Table 1.

(Example 4)

A fluorine-containing formed $TiO_2$-$SiO_2$ glass body was obtained in the same manner as in Example 1, except that the batch method in step (b) was changed to the following continuous supply and discharge method and subsequently the following step (b') was carried out. The fluorine concentration of the formed $TiO_2$-$SiO_2$ glass body was measured. The result is shown in Table 1.

(Step (b))

Continuous Supply and Discharge Method:

A mixed gas of elemental fluorine ($F_2$) diluted to 20 mol% with nitrogen gas having a dew point of -60°C or lower was supplied to the reaction vessel until the internal pressure of the reaction vessel reached the atmospheric pressure. While a mixed gas of elemental fluorine ($F_2$) diluted to 20 mol% with nitrogen gas was continuously supplied at a flow rate of 25 ml/min, and simultaneously, the gas in the reaction vessel was continuously discharged from the reaction vessel so that the internal pressure of the reaction vessel was maintained at the atmospheric pressure, the reaction vessel was maintained under the condition of a pressure of 0.0 MPa in gauge pressure and a temperature of 80°C for 6 hours, to thereby obtain a fluorine-containing porous $TiO_2$-$SiO_2$ glass body.

(Step (b'): Deaeration)

The fluorine-containing porous $TiO_2$-$SiO_2$ glass body was maintained in the same reaction vessel under the condition of a pressure of 2660 Pa or lower in absolute pressure and a temperature of 140°C for 3 hours, to deaerate the fluorine-containing porous $TiO_2$-$SiO_2$ glass body.

(Example 5)

A fluorine-containing formed $TiO_2$-$SiO_2$ glass body was obtained in the same manner as in Example 1, except that the batch method in step (b) was changed to the following intermittent supply and discharge method and subsequently the following step (b') was carried out. The fluorine concentration of the formed $TiO_2$-$SiO_2$ glass body was measured. The result is shown in Table 1.

(Step (b))

Intermittent supply and discharge method:

(1) A mixed gas of elemental fluorine ($F_2$) diluted to 20 mol% with nitrogen gas having a dew point of -60°C or lower was supplied to the reaction vessel until the internal pressure of the reaction vessel reached 0.18 MPa in a gauge pressure. The reaction vessel was maintained under the airtight condition of a pressure of 0.18 MPa in gauge pressure and a temperature of 80°C for 6 hours.
(2) The gas in the reaction vessel was purged to lower the internal pressure to the atmospheric pressure and then a mixed gas of elemental fluorine ($F_2$) diluted to 20 mol% with nitrogen gas having a dew point of -60°C or lower was flowed therethrough at a rate of 100 ml/min for 20 minutes, to thereby replace elemental fluorine ($F_2$) in the reaction vessel with the gas.
(3) A mixed gas of elemental fluorine ($F_2$) diluted to 20 mol% with nitrogen gas having a dew point of -60°C or lower was supplied to the reaction vessel until the internal pressure of the reaction vessel reached 0.18 MPa in a gauge pressure. The reaction vessel was maintained under the airtight condition of a pressure of 0.18 MPa in a gauge pressure and a temperature of 80°C for 6 hours.

Then, the operations (2) and (3) were further repeated twice so that a period during which the porous $TiO_2$-$SiO_2$ glass body was maintained under the airtight condition was 24 hours in total, to thereby obtain a fluorine-containing porous $TiO_2$-$SiO_2$ glass body.

(Step (b'): Deaeration)

The fluorine-containing porous $TiO_2$-$SiO_2$ glass body was maintained in the same reaction vessel under the condition of a pressure of 2660 Pa or lower in absolute pressure and a temperature of 140°C for 3 hours, to deaerate the fluorine-containing porous $TiO_2$-$SiO_2$ glass body.

(Example 6)

(Step (a))

TiCl$_4$ and SiCl$_4$, which are glass-forming materials of TiO$_2$-SiO$_2$ glass, were gasified, mixed and then subjected to heat hydrolysis (flame hydrolysis) in an oxyhydrogen flame, and the resulting TiO$_2$-SiO$_2$ glass fine particles were deposited and grown onto a substrate, to thereby form a porous TiO$_2$-SiO$_2$ glass body.

(Step (a'))

Since it is difficult to handle the porous TiO$_2$-SiO$_2$ glass body thus obtained without any treatment, the porous TiO$_2$-SiO$_2$ glass body was maintained in the air at 1,200°C for 4 hours in a state still deposited on the substrate, and the porous TiO$_2$-SiO$_2$ glass body was separated from the substrate, to thereby obtain a porous TiO$_2$-SiO$_2$ glass body having a diameter of about 300 mm, a length of about 250 mm and a bulk density of 0.65 g/cm$^3$.

(Step (b))

The porous TiO$_2$-SiO$_2$ glass body was supported with an SUS316L-made jig and was then placed together with the jig in an SUS316L-made reaction vessel (volume: 50 L).
The reaction vessel was then heated from the outside thereof using a mantle heater to increase the internal temperature of the reaction vessel to 80°C from ambient temperature at a temperature increasing rate of 0.5 to 2°C/min.
While internal temperature of the reaction vessel was maintained at 80°C, vacuum deaeration was carried out until the internal pressure of the reaction vessel reached 13,000 Pa or lower in an absolute pressure, and the reaction vessel was maintained for one hour.
Intermittent Supply and Discharge Method:

(1) A mixed gas of elemental fluorine (F$_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the airtight condition of a pressure of 0.05 MPa in a gauge pressure and a temperature of 80°C for 6 hours.
(2) The gas in the reaction vessel was purged to lower the internal pressure to the atmospheric pressure and then a mixed gas of elemental fluorine (F$_2$) diluted to 20 mol% with nitrogen gas having a dew point of -60°C or lower was flowed therethrough at a rate of 400 ml/min, to thereby replace elemental fluorine (F$_2$) in the reaction vessel with the gas.
(3) A mixed gas of elemental fluorine (F$_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the airtight condition of a pressure of 0.05 MPa in a gauge pressure and a temperature of 80°C for 6 hours.

Then, the operations (2) and (3) were further repeated four times so that a period during which the porous TiO$_2$-SiO$_2$ glass body was maintained under the airtight condition was 36 hours in total, to thereby obtain a fluorine-containing porous TiO$_2$-SiO$_2$ glass body.

(Step (b'): Deaeration)

The reaction vessel was heated to 140°C, vacuum deaeration was carried out until the internal pressure of the reaction vessel reached 13,000 Pa or lower in an absolute pressure and the reaction vessel was maintained under this condition for 3 hours, to thereby obtain a fluorine-containing porous TiO$_2$-SiO$_2$ glass body.

(Step (c))

The fluorine-containing porous TiO$_2$-SiO$_2$ glass body was moved to a vitrification furnace. The porous TiO$_2$-SiO$_2$ glass body was heated to 1,360°C under reduced pressure in the vitrification furnace, maintained for 3 hours, subsequently heated to a transparent vitrification temperature (1,450°C) under a 100% helium gas atmosphere, and maintained for 4 hours, to thereby obtain a fluorine-containing transparent TiO$_2$-SiO$_2$ glass body.

(Step (d))

The fluorine-containing transparent $TiO_2$-$SiO_2$ glass body was moved to a carbon furnace and heated to a softening temperature or higher (1,700°C) under an argon gas atmosphere and formed to a circumferential shape, thereby obtaining a fluorine-containing formed $TiO_2$-$SiO_2$ glass body. The fluorine concentration of the formed $TiO_2$-$SiO_2$ glass body was measured. The result is shown in Table 1.

(Fluorine Concentration Variation ΔF)

The cylindrical formed $TiO_2$-$SiO_2$ glass body obtained in Example 6 was cut into cylindrical glass body having a diameter of 85 mm and a thickness of 50 mm by grinding the outer peripheral portion thereof, and the cylindrical glass body was sliced into six glass pieces each having a thickness of 12 mm by the above-mentioned manner. To these six glass pieces, seven points of fluorine concentrations in total including six points of fluorine concentrations on the surface at the same side to the plane A of respective glass pieces and one point of fluorine concentration on the surface B were obtained by fluorescence X-ray utilizing samples having known fluorine concentrations with FP method (fundamental parameter method). A fluorine concentration variation width (ΔF) in the whole formed $TiO_2$-$SiO_2$ glass body was obtained from the maximum and minimum values of the seven points of fluorine concentrations. The average fluorine concentration was 4,300 ppm, the maximum value was 4,700 ppm, the minimum value was 3,900 ppm, and a fluorine concentration variation width ΔF was ±9% of the average fluorine concentration.

(Example 7)

(Step (a))

Quartz glass fine particles obtained by heat hydrolysis (flame hydrolysis) of $SiCl_4$, which serves as a glass-forming material of synthetic quartz glass, in an oxyhydrogen flame were deposited and grown onto a substrate, to thereby form a porous glass body.

(Step (a'))

Since it is difficult to handle the porous glass body thus obtained without any treatment, the porous glass body was maintained in the air at 1,200°C for 4 hours in a state still deposited on the substrate, and the porous glass body was separated from the substrate, to thereby obtain a porous glass body having a diameter of about 80 mm, a length of about 100 mm and a bulk density of 0.65 $g/cm^3$.

(Step (b))

The porous glass body was supported with a PFA-made jig and was then placed together with the jig in a nickel reaction vessel (volume: 1 L).
The reaction vessel was heated from the outside thereof using an oil bath to increase the internal temperature of the reaction vessel to 80°C from ambient temperature at a temperature increasing rate of 0.5 to 2°C/min.
While the internal temperature of the reaction vessel was maintained at 80°C, vacuum deaeration was carried out until the internal pressure of the reaction vessel reached 2,660 Pa or lower in an absolute pressure, and the reaction vessel was then maintained for one hour.
Batch Method:

A mixed gas of elemental fluorine ($F_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the condition of a pressure of 0.05 MPa in a gauge pressure and a temperature of 80°C for 24 hours, to thereby obtain a fluorine-containing porous glass body.

(Step (c))

The fluorine-containing porous glass body was moved to a vitrification furnace. The porous glass body was heated to 1,360°C under reduced pressure in the vitrification furnace, maintained for 3 hours, subsequently heated to a transparent vitrification temperature (1,450°C) under a 100% helium gas atmosphere, and maintained for 4 hours, to thereby obtain a fluorine-containing transparent glass body.

(Step (d))

The fluorine-containing transparent glass body was moved to a carbon furnace and heated to a softening temperature or higher (1,700°C) under an argon gas atmosphere and formed to a circumferential shape, thereby obtaining a fluorine-containing formed glass body. The fluorine concentration of the formed glass body was measured. The result is shown in Table 1.

(Example 8)

A fluorine-containing formed glass body was obtained in the same manner as in Example 7, except that the batch method in step (b) was changed to the following intermittent supply and discharge method. The fluorine concentration of the formed glass body was measured. The result is shown in Table 1.

(Step (b))

Intermittent supply and discharge method:

(1) A mixed gas of elemental fluorine ($F_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the airtight condition of a pressure of 0.05 MPa in gauge pressure and a temperature of 80°C for 6 hours.
(2) The gas in the reaction vessel was purged to lower the internal pressure to the atmospheric pressure and then a mixed gas of elemental fluorine ($F_2$) diluted to 20 mol% with nitrogen gas having a dew point of -60°C or lower was flowed therethrough at a rate of 400 ml/min for 2 hours, to thereby replace elemental fluorine ($F_2$) in the reaction vessel with the gas.
(3) A mixed gas of elemental fluorine ($F_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the airtight condition of a pressure of 0.05 MPa in a gauge pressure and a temperature of 80°C for 6 hours.

Then, the operations (2) and (3) were further repeated twice so that a period during which the porous glass body was maintained under the airtight condition was 24 hours in total, to thereby obtain a fluorine-containing porous glass body.
Table 1

| | Step (b) | | | | | | | Fluorine Concentration [ppm] |
|---|---|---|---|---|---|---|---|---|
| | Method | Bulk Density [g/cm³] | Temperature [°C] | Pressure [MPaG] | Period [hr] | NaF | Deaeration | |
| EX.1 | Batch | 0.3 | 140 | 0.21 | 24 | Absent | Not Carried out | 470 |
| EX.2 | Batch | 0.3 | 140 | 0.21 | 24 | Present | Not Carried out | 1,900 |
| EX.3 | Batch | 0.3 | 80 | 0.18 | 24 | Present | Not Carried out | 2,900 |
| EX.4 | Continuous Supply and Discharge | 0.3 | 80 | 0 | 6 | Absent | Carried out | 3,300 |
| EX.5 | Intermittent Supply and Discharge | 0.3 | 80 | 0.18 | 6x4 times | Absent | Carried out | 3,500 |
| EX.6 | Intermittent Supply and Discharge | 0.65 | 80 | 0.05 | 6x6 times | Absent | Carried out | 4,300 |

(continued)

| | | Step (b) | | | | | | Fluorine Concentration [ppm] |
|---|---|---|---|---|---|---|---|---|
| | Method | Bulk Density [g/cm$^3$] | Temperature [°C] | Pressure [MPaG] | Period [hr] | NaF | Deaeration | |
| EX.7 | Batch | 0.65 | 80 | 0.05 | 24 | Absent | Not Carried out | 500 |
| EX. 8 | Intermittent Supply and Discharge | 0.65 | 80 | 0.05 | 6x4 times | Absent | Not Carried out | 3,100 |

It is confirmed that, in Example 4 which utilized a continuous supply and discharge method without using sodium fluoride, the fluorine concentration comparable to that of Example 3 which utilized a batch method with using sodium fluoride can be achieved. In Examples 5 and 6 which utilized an intermittent supply and discharge method, the fluorine concentration comparable to or superior to that of Example 4 can be achieved and the effects of the intermittent supply and discharge method can be confirmed.

In Examples 7 and 8 in which a porous glass body containing no $TiO_2$ was used, comparing the case of utilizing a batch method with the case of utilizing an intermittent supply and discharge method, the fluoride concentration of the finally-obtained formed glass body became lower of 500 ppm in the batch method. The reason is considered that proton sources (Si-OH) produced by HF could not be reduced in step (b), and thus resulting in elimination of fluorine in step (c). Meanwhile, in Example 8 utilizing an intermittent supply and discharge method, the fluorine concentration exceeding 3,000 ppm could be achieved and the effects of the intermittent supply and discharge method can be confirmed.

(Example 9)

(Step (a))

$TiCl_4$ and $SiCl_4$, which are glass-forming materials of $TiO_2$-$SiO_2$ glass, were gasified, mixed and then subjected to heat hydrolysis (flame hydrolysis) in an oxyhydrogen flame, and the resulting $TiO_2$-$SiO_2$ glass fine particles were deposited and grown onto a substrate, to thereby form a porous $TiO_2$-$SiO_2$ glass body.

(Step (a'))

Since it is difficult to handle the porous $TiO_2$-$SiO_2$ glass body thus obtained without any treatment, the porous $TiO_2$-$SiO_2$ glass body was maintained in the air at 1,200°C for 4 hours in a state still deposited on the substrate, and the porous $TiO_2$-$SiO_2$ glass body was separated from the substrate to obtain a porous $TiO_2$-$SiO_2$ glass body having a diameter of about 300 mm, a length of about 250 mm and a bulk density of 0.30 g/cm$^3$.

(Step (b))

The porous $TiO_2$-$SiO_2$ glass body was supported with an SUS316L-made jig and was then placed together with the jig in an SUS316L-made reaction vessel (volume: 50 L).
The reaction vessel was heated from the outside thereof using a mantle heater to increase the internal temperature of the reaction vessel to 80°C from ambient temperature at a temperature increasing rate of 0.5 to 2°C/min.
While the internal temperature of the reaction vessel was maintained at 80°C, vacuum deaeration was carried out until the internal pressure of the reaction vessel reached 13,000 Pa or lower in absolute pressure, and the reaction vessel was maintained for one hour.

Intermittent Supply and Discharge Method:

(1) A mixed gas of elemental fluorine ($F_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the airtight condition of a pressure of 0.05 MPa in a gauge pressure and a temperature of 80°C for 6 hours.
(2) The gas in the reaction vessel was purged to lower the internal pressure to the atmospheric pressure and then a mixed gas of elemental fluorine ($F_2$) diluted to 20 mol% with nitrogen gas having a dew point of -60°C or lower was flowed therethrough at a rate of 400 ml/min, to thereby replace elemental fluorine (F$_2$) in the reaction vessel with the gas.

(3) A mixed gas of elemental fluorine (F$_2$) diluted to 20 mol% with nitrogen gas having a dew point of -60°C or lower was supplied to the reaction vessel until the internal pressure of the reaction vessel reached 0.05 MPa in a gauge pressure. The reaction vessel was maintained under the airtight condition of a pressure of 0.05 MPa in a gauge pressure and a temperature of 80°C for 6 hours.

Then, the operations (2) and (3) were further repeated four times so that a period during which the porous TiO$_2$-SiO$_2$ glass body was maintained under the airtight condition was 24 hours in total, to thereby obtain a fluorine-containing porous TiO$_2$-SiO$_2$ glass body.

In the above operations (1) to (3), the supply amount and discharge amount of elemental fluorine, and residence time were measured. As a result, they were 2.29 mol, 0.20 mol, and 34.7 hr, respectively. The consumption rate was calculated and was 0.060 mol/hr. The results are shown in Table 2.

(Step (b'): Deaeration)

The reaction vessel was heated to 140°C, vacuum deaeration was carried out until the internal pressure of the reaction vessel reached 13,000 Pa or lower in an absolute pressure and the reaction vessel was maintained under this condition for 5 hours, to thereby obtain a fluorine-containing porous TiO$_2$-SiO$_2$ glass body.

(Step (c))

The fluorine-containing porous TiO$_2$-SiO$_2$ glass body was moved to a vitrification furnace. The porous TiO$_2$-SiO$_2$ glass body was heated to 1,360°C under reduced pressure in the vitrification furnace, maintained for 3 hours, subsequently heated to a transparent vitrification temperature (1,450°C) under a 100% helium gas atmosphere, and maintained for 4 hours, to thereby obtain a fluorine-containing transparent TiO$_2$-SiO$_2$ glass body.

(Step (d))

The fluorine-containing transparent TiO$_2$-SiO$_2$ glass body was moved to a carbon furnace and heated to a softening temperature or higher (1,700°C) under an argon gas atmosphere and formed to a circumferential shape, thereby obtaining a fluorine-containing formed TiO$_2$-SiO$_2$ glass body.

(Step (e))

The formed glass body obtained in step (d) was maintained at 1,000°C for one hour or longer, and then subjected to annealing treatment in which the glass body was cooled to 940°C. The glass body was maintained at 940°C for 1 hour or longer, cooled, and then allowed to stand for natural cooling.

(Fluorine Concentration Variation ΔF, and Elimination Amount of Fluorine in Step (c, d))
The cylindrical formed TiO$_2$-SiO$_2$ glass body obtained in step (e) was cut into cylindrical glass body having a diameter of 85 mm and a thickness of 50 mm by grinding the outer peripheral portion thereof, and the cylindrical glass body was sliced into six glass pieces each having a thickness of 12 mm by the above-mentioned manner. To these six glass pieces, seven points of fluorine concentrations in total including six points of fluorine concentrations on the surface at the same side to the plane A of respective glass pieces and one point of fluorine concentration on the surface B were obtained by fluorescence X-ray utilizing samples having known fluorine concentrations with FP method (fundamental parameter method). A fluorine concentration variation width (ΔF) in the whole formed TiO$_2$-SiO$_2$ glass body was obtained from the maximum and minimum values of the seven points of fluorine concentrations. The average fluorine concentration was 4,900 ppm, the maximum value was 5,250 ppm, the minimum value was 4,660 ppm, and a fluorine concentration variation width ΔF was 590 ppm, that is, ±6% of the average fluorine concentration. The elimination amount of fluorine in step (c,d) was 7,300 ppm.

(Average Fictive Temperature)

Glass pieces are collected from one site in the central portion of a cylindrical formed glass body obtained in step (e), one site in the outer peripheral portion thereof and one site in the intermediate portion thereof, respectively, and mirror polishing is carried out for these glass pieces. An absorption spectrum is obtained on each of mirror-polished glass pieces by using an infrared spectrophotometer (Magna 760, manufactured by Nicolet), and the fictive temperature was determined by the above mentioned manner. The fictive temperature was 920°C and the fictive temperature variation width is 20°C. The results are shown in Table 3.

(Example 10)

A fluorine-containing formed $TiO_2$-$SiO_2$ glass body was obtained in the same manner as in Example 9, except that the reaction temperature in step (b) was changed to 140°C and the operations (2) and (3) was carried out 6 times in total. The supply amount and discharge amount of elemental fluorine, and residence time were measured. As a result, they were 3.43 mol, 0.03 mol, and 52.0 hr, respectively. The consumption rate was calculated and was 0.065 mol/hr. The results are shown in Table 2.
Steps (b'), (c), (d), and (e), and measurements of fluorine concentration and fictive temperature were carried out in the same manner as in Example 9. The results are shown in Table 3.

(Example 11)

A fluorine-containing formed $TiO_2$-$SiO_2$ glass body was obtained in the same manner as in Example 9, except that the reaction temperature in step (b) was 80°C and the operations (2) and (3) was carried out twice in total. The supply amount and discharge amount of elemental fluorine, and residence time were measured. As a result, they were 1.14 mol, 0.29 mol, and 17.3 hr, respectively. The consumption rate was calculated and was 0.049 mol/hr. The results are shown in Table 2.
Steps (b'), (c), (d), and (e), and measurements of fluorine concentration and fictive temperature were carried out in the same manner as in Example 9. The results are shown in Table 3.

(Example 12)

Steps (a), (a'), (b), (c), and (d) were carried out in the same manner as in Example 1, and the supply amount and discharge amount of elemental fluorine, residence time, the consumption rate, and the elimination amount of fluorine were measured. The results are shown in Tables 2 and 3.
Table 2

| | Step (b) | | | | | | | | | |
|---|---|---|---|---|---|---|---|---|---|---|
| | Method | Bulk Density [g/cm$^3$] | Temperature [°C] | Pressure [MPaG] | NaF | Deaeration | Supply Amount [mol/kg] | Discharge Amount [mol/kg] | Residence Time [hr] | Consumption Rate [mol/ (hr·kg)] |
| EX. 9 | Intermittent Supply and Discharge | 0.3 | 80 | 0.05 | Absent | Carried out | 0.43 | 0.04 | 34.7 | 0.011 |
| EX. 10 | Intermittent Supply and Discharge | 0.3 | 140 | 0.05 | Absent | Carried out | 0.65 | 0.01 | 52.0 | 0.012 |
| EX. 11 | Intermittent Supply and Discharge | 0.3 | 80 | 0.05 | Absent | Carried out | 0.22 | 0.06 | 17.3 | 0.009 |
| EX. 12 | Batch | 0.3 | 140 | 0.21 | Absent | Not Carried out | 2.36 | 0.00 | 24.0 | 0.095 |

Table 3

|  | Step (c,d) | Step (e) | | | | |
|---|---|---|---|---|---|---|
|  | Elimination Amount [ppm] | Ti Concentration [%] | Average of Fluorine Concentration [ppm] | fluorine Concentration Variation Width $\Delta F$ [ppm] | Average of Fictive Temperature [°C] | Fictive Temperature Variation Width $\Delta Tf$ [°C] |
| EX. 9 | 7,300 | 6.34 | 4,900 | 590 | 920 | 20 |
| EX. 10 | 7,000 | 5.53 | 8,900 | 740 | 910 | 20 |
| EX. 11 | 2,900 | 6.51 | 3,400 | 370 | 890 | 10 |
| EX. 12 | 88,500 | 6.70 | 500 | - | - | - |

In Example 12 in which the consumption rate was 0.095 mol/(hr·kg), the elimination amount of fluorine became extremely large and the introduction amount of fluorine became low of 500 ppm. On the other hand, in each of Examples 9, 10 and 11 in which the supply amount and discharge amount of fluorine and the residence time were controlled so as to give a consumption rate of about 0.01 mol/(hr·kg), the introduction amount of fluorine beyond 3,000 ppm was achieved. Further, small variation width of fluorine concentration and small variation width of fictive temperature were realized.

While the invention has been described in detail and with reference to specific embodiments thereof, it will be apparent to one skilled in the art that various changes and modifications can be made therein without departing from the spirit and scope thereof.

This application is based on Japanese patent application Nos. 2010-085348 and 2011-076279 filed on April 1, 2010 and March 30, 2011, respectively, and the entire contents of which are incorporated hereinto by reference.

The synthetic quartz glass produced by the production method of the present invention is suitable as an optical device or an optical member in which ultraviolet rays are handled or as an optical device or an optical member in which an index of reflection is controlled. Further, $TiO_2$-$SiO_2$ glass produced by the production method of the present invention is suitable as an optical member requiring a super-low thermal expansion property, in particular, as an optical member of an exposure apparatus for EUV lithography.

**Claims**

1. A method for production of a synthetic quartz glass having a fluorine concentration of 1,000 ppm by mass or higher, comprising the following steps (a) to (c):

   (a) depositing and growing quartz glass fine particles obtained by flame hydrolysis of a glass-forming material onto a substrate, to thereby form a porous glass body;
   (b) maintaining the porous glass body in a reaction vessel under an elemental fluorine ($F_2$)-containing atmosphere of 400°C or lower, to thereby obtain a fluorine-containing porous glass body; and
   (c) heating the fluorine-containing porous glass body in a vitrification furnace to a transparent vitrification temperature, to thereby obtain a fluorine-containing transparent glass body,

   wherein, in step (b), elemental fluorine ($F_2$) is continuously or intermittently supplied to the reaction vessel and the gas in the reaction vessel is continuously or intermittently discharged from the reaction vessel.

2. A method for production of a $TiO_2$-containing synthetic quartz glass ($TiO_2$-$SiO_2$ glass) having a fluorine concentration of 1,000 ppm by mass or higher, comprising the following steps (a) to (c) :

   (a) depositing and growing $TiO_2$-$SiO_2$ glass fine particles obtained by flame hydrolysis of a glass-forming material onto a substrate, to thereby form a porous $TiO_2$-$SiO_2$ glass body;
   (b) maintaining the porous $TiO_2$-$SiO_2$ glass body in a reaction vessel under an elemental fluorine ($F_2$)-containing atmosphere of 400°C or lower, to thereby obtain a fluorine-containing porous $TiO_2$-$SiO_2$ glass body; and

(c) heating the fluorine-containing porous $TiO_2$-$SiO_2$ glass body in a vitrification furnace to a transparent vitrification temperature, to thereby obtain a fluorine-containing transparent $TiO_2$-$SiO_2$ glass body,

wherein, in step (b), elemental fluorine ($F_2$) is continuously or intermittently supplied to the reaction vessel and the gas in the reaction vessel is continuously or intermittently discharged from the reaction vessel.

**3.** The method according to claim 1 or 2, wherein, in step (b), a supply amount and discharge amount of elemental fluorine ($F_2$), and a residence time are controlled so that a consumption rate of elemental fluorine ($F_2$) obtained by the following equation is adjusted to a prescribed rate:

$$[\text{Consumption Rate}] = ([\text{Supply Amount}] - [\text{Discharge Amount}]) / [\text{Residence Time}]$$

wherein [Consumption Rate] represents a consumption amount (moles) of elemental fluorine ($F_2$) per unit time, per unit weight of the porous glass body; [Supply Amount] represents an amount (moles) of elemental fluorine ($F_2$) supplied to the reaction vessel, per unit weight of the porous glass body; [Discharge Amount] represents a amount (moles) of elemental fluorine ($F_2$) discharged from the reaction vessel, per unit weight of the porous glass body; and [Residence Time] represents a period obtained by the following equation:

$$[\text{Residence Time}] = [\text{Total Amount of Gas Phase in the Reaction Vessel}] / [\text{Supply Rate}]$$
$$+ [\text{Airtight Maintaining Period}]$$

wherein [Total Amount of Gas Phase in the Reaction Vessel] represents a total amount (moles) of gas components contained in the gas phase in the reaction vessel; [Supply Rate] represents a total supply amount (moles) of elemental fluorine ($F_2$) or a mixed gas of elemental fluorine ($F_2$) diluted with an inert gas supplied to the reaction vessel per unit time; and [Airtight Maintaining Period] represents a maintaining period per airtightness maintenance.

**4.** The method according to claim 3, wherein, the consumption rate of elemental fluorine ($F_2$) falls within the range of from $3.1 \times 10^{-4}$ mol/(hr·kg) to 0.08 mol/(hr·kg).

Europäisches
Patentamt

European
Patent Office

Office européen
des brevets

# EUROPEAN SEARCH REPORT

Application Number

EP 11 00 2704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/195107 A1 (IKUTA YOSHIAKI [JP] ET AL) 16 October 2003 (2003-10-16) * paragraphs [0074] - [0077], [0079], [0158], [0164]; claims 16-18; tables 4,7 * | 1-4 | INV. C03B19/14 |
| X | WO 2009/107869 A1 (ASAHI GLASS CO LTD [JP]; KOIKE AKIO [JP]; IWAHASHI YASUTOMI [JP]; KIKU) 3 September 2009 (2009-09-03) * page 12, lines 6-22 * * page 14, line 6 - page 15, line 27 * | 1-4 | |
| X | JP 2003 201124 A (ASAHI GLASS CO LTD) 15 July 2003 (2003-07-15) * paragraph [0024]; tables 1,2 * | 1-4 | |

TECHNICAL FIELDS
SEARCHED      (IPC)

C03B

The present search report has been drawn up for all claims

| Place of search | Date of completion of the search | Examiner |
|---|---|---|
| Munich | 13 May 2011 | Martinek, K |

EPO FORM 1503 03.82 (P04C01)

**ANNEX TO THE EUROPEAN SEARCH REPORT
ON EUROPEAN PATENT APPLICATION NO.**

EP 11 00 2704

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2011

| Patent document cited in search report | | Publication date | Patent family member(s) | | Publication date |
|---|---|---|---|---|---|
| US 2003195107 | A1 | 16-10-2003 | NONE | | |
| WO 2009107869 | A1 | 03-09-2009 | CN | 101959818 A | 26-01-2011 |
| | | | EP | 2250133 A1 | 17-11-2010 |
| | | | KR | 20100118125 A | 04-11-2010 |
| | | | US | 2010323873 A1 | 23-12-2010 |
| JP 2003201124 | A | 15-07-2003 | JP | 4085633 B2 | 14-05-2008 |

EPO FORM P0459

For more details about this annex : see Official Journal of the European Patent Office, No. 12/82

## REFERENCES CITED IN THE DESCRIPTION

### Patent documents cited in the description

- JP 2003183034 A
- JP 2005104820 A
- JP 63024973 A
- JP 2008259711 A
- JP 2010085348 A
- JP 2011076279 A